# EUROPEAN PATENT SPECIFICATION

(11) **EP 3 933 321 B1**
(45) Date of publication and mention of the grant of the patent: **02.04.2025**
(21) Application number: 20763912.1
(22) Date of filing: 13.02.2020
(51) Int. Cl.: F25D 23/10, F25D 21/14, F25B 21/02

(54) **REFRIGERATOR FOR FRONT DOOR**
KÜHLSCHRANK FÜR EINE VORDERTÜR
RÉFRIGÉRATEUR POUR PORTE FRONTALE

(30) Priority: 25.02.2019 KR 20190021867
(43) Date of publication of application: 05.01.2022
(73) Proprietor: LG Electronics Inc., SEOUL 07336 (KR)
(72) Inventor: YEO, Insun, Seoul 08592 (KR); CHOI, Kyukwan, Seoul 08592 (KR); YUN, Yezo, Seoul 08592 (KR); OH, Minkyu, Seoul 08592 (KR)
(74) Representative: Ter Meer Steinmeister & Partner
(86) International application number: PCT/KR2020/002079
(87) International publication number: WO 2020/175833

(56) References cited:
- WO-A1-2018/174468
- WO-A1-94/24495
- WO-A1-97/41542
- FR-A- 1 347 414
- JP-A- 2016 130 609
- JP-A- 2017 198 360
- KR-A- 20070 003 221
- KR-Y1- 200 357 547
- US-A1- 2005 210 884
- US-A1- 2017 213 187

## Description

### TECHNICAL FIELD

The present invention relates to a refrigerator for a front door.

### BACKGROUND ART

Recently, a delivery service for delivering articles to a predetermined place has been activated. Particularly, when the article is fresh food, a refrigerator or a heating cabinet is provided in the delivery vehicle to prevent the food from being spoiling or getting cold so that the food is stored and delivered.

Also, it is common that food is delivered in a packaging material for maintaining a cold or warm state. The packaging material is made of environmental pollutants such as Styrofoam, thereby creating a social atmosphere to reduce usage.

If the user is at home at the delivery time, the delivery person and the user may face-to-face to receive food, but when the user is not at home or when the delivery time is too early or too late, it is difficult for the delivery person and the user to face-to-face to receive the food.

Therefore, even if the delivery person and the user do not directly face each other, the food may be delivered, and there is a need to not spoil or cool the food until it is finally delivered to the user.

In order to solve this problem, recently, the refrigerator is installed at the entrance (front door) at a predetermined place, so that the delivery person keeps the food in the refrigerator to keep the food in a fresh state, and the user may access the refrigerator at a convenient time to receive the food.

In relation to a refrigerator for a front door (hereinafter, referred to as an entrance refrigerator), the prior art has been disclosed as follows.
1. Patent Publication No (Publication Date): 10-2011-0033394 (March 31. 2011)
2. Title of Invention: REFRIGERATOR ATTACHED TO entrance door AND MAIN DOOR

According to the prior art document, it is described that a cooling device is provided at a lower portion of the refrigerator, but the detailed configuration of the cooling device is not disclosed at all.

Particularly, the entrance refrigerator may be installed on a door or wall. In order to prevent the refrigerator from falling from the door or the wall, the refrigerator needs not to be too heavy.

However, when the cooling device for generating cold air by driving a refrigerant cycle is applied to the entrance refrigerator, there is a problem in that the weight of the refrigerator becomes too heavy.
WO 97/41542 A1 discloses an entrance refrigerator according to the preamble of claim 1. This document shows a storage device that secures goods from theft and exposure to the elements and that provides a notification that goods have been delivered and/or picked up is disclosed. The storage device includes an enclosure for enclosing the goods and a communication apparatus for providing notification that goods have been delivered or picked up.
US 2005/210884 A1 discloses a portable cooled merchandising unit including a product container assembly and a thermoelectric assembly. The product container assembly includes an interior floor and at least one interior panel extending from the floor and defining a portion of an interior region. An opening to the interior region is defined opposite the floor. A first airflow path is defined along at least a portion of the panel and fluidly connected to the opening. The thermoelectric assembly includes a thermoelectric device connected to a heat sink that is fluidly connected to the airflow path away from the opening. Further, a fan is positioned to circulate air from the thermoelectric device, through the airflow path, and to the opening.
US 2017/213187 A1 discloses a storage apparatus and a method for controlling the same are disclosed, which relate to a technology for a storage apparatus and a method for controlling the same to receive or return a package, which should be stored at a controlled temperature, such as food, in a non-face to face manner using two doors open in opposite directions such that a delivery person and a consumer do not meet each other. The storage apparatus includes a first door, a second door provided to face the first door, an imaging device configured to acquire an image of the package accommodated in the storage apparatus, a communicator configured to transmit the acquired image of the package to an external device, and a controller configured to control a storage temperature for the package in accordance with a package storage temperature set by the external device based on the image of the package.

### DISCT OSTTRE OF THE INVENTION

### TECHNICAL PROBLEM

In order to solve the above problems, an object of the present invention is to provide an entrance refrigerator, which is capable of storing food freshly and safely deliver food to a user by installing the refrigerator on a front door or wall.

In addition, an object of the present invention is to provide an entrance refrigerator, which is capable of easily supplying cold air and reducing the overall weight of the refrigerator by providing a storage compartment in an upper portion of the entrance refrigerator and disposing a cold air supply device using a thermoelectric module in a lower portion.

In addition, an object of the present invention is to provide an entrance refrigerator, in which a cold air circulation fan and a heat dissipation fan are disposed in a thermoelectric module in a vertical direction, a cold air circulation fan communicates with a storage compartment to supply cold air from both sides of the storage compartment, and the heat radiation fan suctions external air from a lower portion and discharges the external air in both directions so that the supply of the cold air and the dissipation of heat are easily performed.

In addition, an object of the present invention is to provide an entrance refrigerator, in which food is captured using a camera provided in a storage compartment, and a user is capable of checking an ordered food by checking the captured image through a delivery application.

In addition, an object of the present invention is to provide an entrance refrigerator, in which security of using the refrigerator is improved by being configured to input a password or input food information through a code reader in order to allow a delivery person to store food in the refrigerator.

In addition, an object of the present invention is to provide an entrance refrigerator that not only is capable of being installed by being inserted into a door, but also installed on an entrance wall, supported on the door by a wire, or installed by a separate stand.

### TECHNICAL SOLUTION

The object is solved by the features of claim 1 Preferred embodiments are given in the dependent claims.

### ADVANTAGEOUS EFFECTS

According to an embodiment of the present invention, the refrigerator may be installed on the entrance door or the wall to keep the food fresh and safely deliver the food to the user.

In addition, the storage compartment is provided at the upper portion of the entrance refrigerator, and the cold air supply device using the thermoelectric module may be disposed at the lower portion to easily supply the cold air and reduce the overall weight of the refrigerator.

In addition, the cold air circulation fan and the heat dissipation fan are disposed in the thermoelectric module in the vertical direction, the cold air circulation fan may communicate with the storage compartment to supply the cold air from both the sides of the storage compartment, and the heat radiation fan may suction the external air from the lower portion and discharge the external air in both the directions so that the supply of the cold air and the dissipation of heat are easily performed.

In addition, the food may be captured using the camera provided in the storage compartment, and the user may check the ordered food by checking the captured image through the delivery application.

In addition, the security of using the refrigerator may be improved by being configured to input the password or input food information through the code reader in order to allow the delivery person to store food in the refrigerator.

In addition, the entrance refrigerator may be not only installed by being inserted into the door, but also installed on the entrance wall, supported on the door by the wire, or installed by the separate stand.

### BRIEF DESCRIPTION OF THE DRAWINGS

Fig. 1 is a view illustrating a state in which an entrance refrigerator is installed on an entrance door according to an embodiment of the present invention.
Fig. 2 is a view illustrating a state in which an outer door is opened in the state in which the entrance refrigerator is installed on an entrance door.
Fig, 3 is a schematic view illustrating configurations of an indoor-sider and an outdoor-side based on the door in the state in which the entrance refrigerator is installed on an entrance door.
Fig. 4 is a front perspective view illustrating a configuration of the refrigerator according to an embodiment of the present invention.
Fig. 5 is a rear perspective view illustrating the configuration of the refrigerator according to an embodiment of the present invention.
Fig. 6 is a view illustrating a configuration of an inner storage compartment of the entrance refrigerator according to an embodiment of the present invention.
Fig. 7 is a view illustrating a configuration of a cold air supply device according to an embodiment of the present invention.
FIG. 8 is a cutaway cross-sectional view taken along line 8-8 of Fig. 4.
Fig. 9 is a view a state in which a state in which cold air supply and heat dissipation are performed in the entrance refrigerator according to an embodiment of the present invention.
Fig. 10 is a view illustrating a state in which the entrance refrigerator is installed on a wall of an entrance according to an embodiment of the present invention.
Fig. 11 is a view illustrating a state in which the entrance refrigerator is hung on the entrance door by a wire according to an embodiment of the present invention.
Fig. 12 is a view illustrating a state in which the entrance refrigerator is mounted on a stand according to an embodiment of the present invention.

### MODE FOR CARRYING OUT THE INVENTION

Hereinafter, some embodiments of the present invention will be described in detail with reference to the accompanying drawings. Exemplary embodiments of the present invention will be described below in more detail with reference to the accompanying drawings. It is noted that the same or similar components in the drawings are designated by the same reference numerals as far as possible even if they are shown in different drawings. Further, in description of embodiments of the present disclosure, when it is determined that detailed descriptions of well-known configurations or functions disturb understanding of the embodiments of the present disclosure, the detailed descriptions will be omitted.

Also, in the description of the embodiments of the present disclosure, the terms such as first, second, A, B, (a) and (b) may be used. The terms are merely used to distinguish the corresponding component from other components, and do not delimit an essence, an order or a sequence of the corresponding component. It should be understood that when one component is "connected", "coupled" or "joined" to another component, the former may be directly connected or jointed to the latter or may be "connected", coupled" or "joined" to the latter with a third component interposed therebetween.

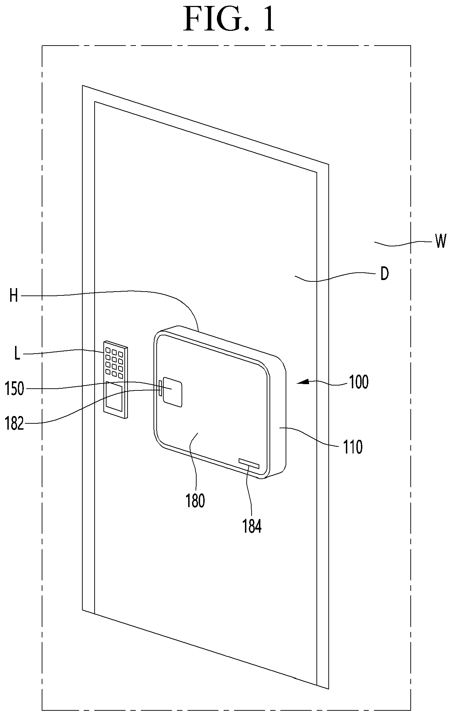

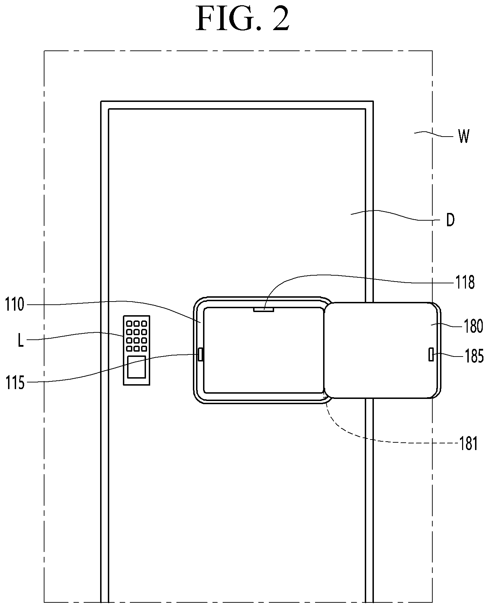

Fig. 1 is a view illustrating a state in which an entrance refrigerator is installed on an entrance door according to an embodiment of the present invention, Fig. 2 is a view illustrating a state in which an outer door is opened in the state in which the entrance refrigerator is installed on an entrance door, and Fig, 3 is a schematic view illustrating configurations of an indoor-sider and an outdoor-side based on the door in the state in which the entrance refrigerator is installed on an entrance door.

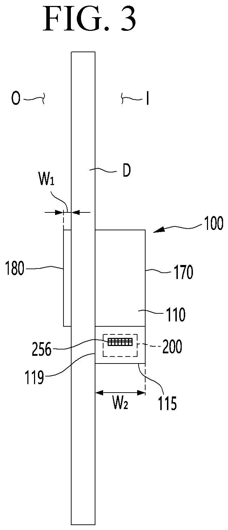

Referring to Figs. 1 to 3, an entrance refrigerator 100 according to an embodiment of the present invention may be installed at an entrance door D of a home or office. The entrance door D is installed on a wall W. Also, a door lock L for opening the door D may be provided.

An opening H is formed in the entrance door D, and the entrance refrigerator 100 may be inserted into the opening H to extend to an indoor-side I and an outdoor-side O. The direction will be defined. With respect to the entrance refrigerator 100, the outdoor-side O is defined as a "front side" and the indoor-side I is defined as a "rear side".

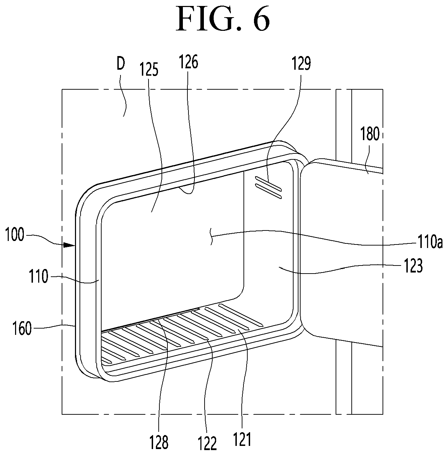

The entrance refrigerator 100 may include a cabinet 110 that forms an outer appearance thereof. For example, the cabinet 110 may have a substantially rectangular parallelepiped shape and be disposed to pass through the opening H. A sealer 160 (see Fig. 6) is provided between the opening H and an outer surface of the cabinet 110 so that the cabinet 110 is in close contact with the opening H.

A storage compartment 110a capable of storing food is formed inside the cabinet 110. A camera 118 may be provided in the storage compartment 110a. For example, the camera 118 may be disposed above the storage compartment 110a. The camera 118 may photograph the food stored in the storage compartment 110a and upload the captured image to a delivery application.

For this, the entrance refrigerator may be provided with a communication module capable of communicating with the outside. For example, the communication module may include a Wi-Fi module.

The storage compartment 110a may be opened to the indoor-side I and the outdoor-side O.

In detail, the entrance refrigerator 100 is provided on one side (outside) of the storage compartment 110a and further includes an outdoor-side door 180 capable of opening or closing the storage compartment 110a. The outdoor-side door 180 may be disposed at the outdoor-side O and may be, for example, a door opened by a food delivery person in order to put the food therein. The outdoor-side door 180 may be in a normally locked state to prevent an opening of any door.

The entrance refrigerator 100 is provided on the other side (indoor-side) of the storage compartment 110a and further includes an indoor-side door 170 capable of opening or closing the storage compartment 110a. The indoor-side door 170 may be disposed at the indoor-side (I) and may be a door opened by a user in order to collect food.

The outdoor-side door 180 and the indoor-side door 170 may be rotatably coupled to the cabinet 110.

The outdoor-side door 180 includes a hinge 181 coupled to the cabinet 110 and a latch 185 hooked to the cabinet 110. The hinge 181 may be provided at one side of both sides of the outdoor-side door 180, and the latch 185 may be provided at the other side of the outdoor-side door 180. In addition, the latch 185 may be provided on a rear surface of the outdoor-side door 180.

A latch coupling portion 115 hooked with the latch 185 may be formed in the cabinet 110 and may be coupled to the latch 185 when the outdoor-side door 180 is closed.

A pressing portion 182 capable of being pressed to open the outdoor-side door 180 is provided on a front surface of the outdoor-side door 180. The pressing portion 182 is disposed in front of the latch 185 to transmit pressing force to the latch 185, and the latch 185 is released from the hook with the latch coupling portion 115 by the transferred the pressing force (push-pull button manner).

Since the configuration of the indoor-side door 170 is similar to that of the outdoor-side door 180, a hinge, a latch, and a pressing portion may also be provided in the indoor-side door 170.

A code reader 184 capable of reading information on delivered food may be provided on a front surface of the outdoor-side door 180. The code reader 184 may include a barcode reader or a QR code reader.

When a food delivery person brings food information (code information) provided on food or a food container to the code reader 184, the entrance refrigerator 100 recognizes that the food is scheduled to be delivered and release the locked state of the outdoor-side door 180. Then, the delivery person may open the outdoor-side door 180 to store the food in the storage compartment 110a.

A display portion 150 may be provided on the outdoor-side door 180. Information that is necessary for use of the entrance refrigerator 100 is displayed on the display portion 150.

For example, the display portion 150 may display a "guide comment" for the delivery person. For example, the guide comment may include a comment such as "Please recognize barcode or QR code of food to code reader".

An input portion for inputting a password may be displayed on the display portion 150. The delivery person may release the lock state of the outdoor-side door 180 by inputting the password promised in advance with the user into the input portion.

In summary, the delivery person allows the food code to be recognized to the code reader 184 or inputs a password to unlock the outdoor-side door 180, and thus, after opening the outdoor-side door 180, the food is stored in the storage compartment 110a.

The cabinet 110 may extend toward the indoor-side I and the outdoor-side O through the door D. A front-rear width W2 of a portion of the cabinet 110, which extends toward the indoor-side I, may be greater than a front-rear width W1 of a portion, which extends toward the outdoor-side O.

According to such a configuration, since an area protruding from the door D toward the indoor-side I is large, and an area protruding from the door D toward the outdoor-side O is small, an area of the entrance refrigerator 100, which is exposed to a space through which arbitrary people pass, may be reduced. Thus, possibility of damage to the entrance refrigerator 100 may be reduced.

A front surface of the outdoor-side door 180 may form the same plane as the front surface of the entrance door D or may be spaced apart from the front surface of the entrance door D as illustrated in the drawings.

A front support portion 119 supported on an outer surface of the door D is included in a lower portion of the cabinet 110 extending toward the indoor-side I. For example, the front support portion 119 may be attached to the outer surface of the door D.

In addition, a cold air supply device 200 is provided at the lower portion of the entrance refrigerator 100. Since a front surface of a portion in which the relatively heavy cold air supply device 200 is accommodated, that is, the front support portion 119 is supported or attached to the door D, the entrance refrigerator 100 may be stably mounted on the door D.

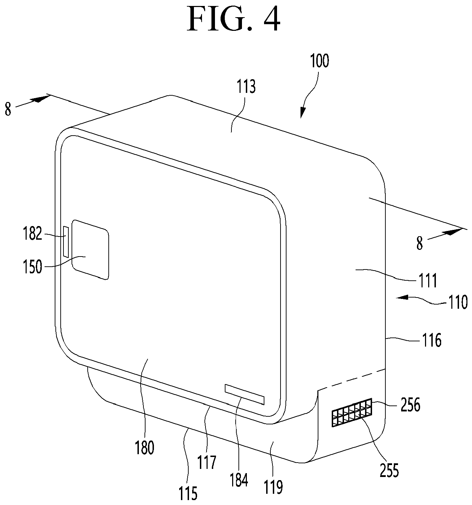

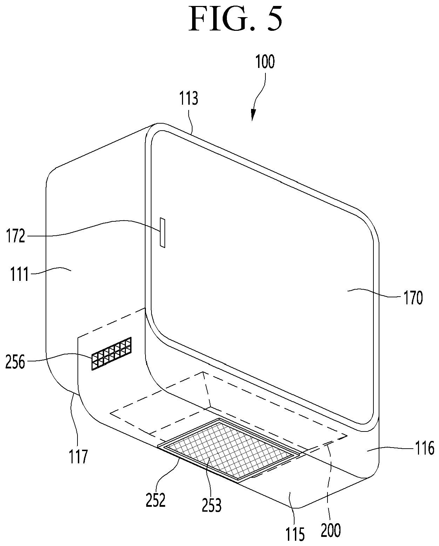

Fig. 4 is a front perspective view illustrating a configuration of the refrigerator according to an embodiment of the present invention, Fig. 5 is a rear perspective view illustrating the configuration of the refrigerator according to an embodiment of the present invention, and Fig. 6 is a view illustrating a configuration of an inner storage compartment of the entrance refrigerator according to an embodiment of the present invention.

Referring to Figs. 4 to 6, the entrance refrigerator 100 according to an embodiment of the present invention includes a cabinet 110 forming an outer appearance thereof. The cabinet 110 may include two cabinet side surface portions 111, a cabinet top surface portion 113 connecting upper portions of the two cabinet side surface portions 111, a cabinet bottom surface portion 115 forming a bottom surface of the cabinet 110, a cabinet rear surface portion 116 forming a rear surface of the cabinet 110, and a front surface support portion 119 extending upward from a front end of the cabinet bottom surface portion 115 and supported or attached to an outer surface of the door D. A cold air supply device 200 may be disposed at a rear side of the front surface support portion 119.

The cabinet 110 further includes a storage compartment bottom surface portion 117 extending forward from an upper end of the front surface support portion 119 to form a bottom surface of the storage compartment 110a.

According to the configuration of the cabinet 110, the cabinet 110 may be configured to have an "L" shape. In detail, the cabinet 110 may be understood to include a first case forming a storage compartment having a hexahedral shape and a second case formed below the first case. In addition, the second case may be formed to further extend to a downward side of the first case from a point spaced backward from a front end of the first case.

A storage compartment 110a is formed inside the first case, and a heat dissipation space in which the cold air supply device 200 is installed is formed inside the second case. The storage compartment 110a and the heat dissipation space are partitioned by a partition wall, and the first and second cases may be provided as a single body. The partition wall may be a storage compartment lower wall 121.

A dissipated heat discharge portion 255 through which external air passing through a heat dissipation portion of the cold air supply device 200 is discharged is formed at a lower portion of the cabinet side surface portion 111, specifically, at any point of the cabinet side surface portion 111 defining a side surface of the second case. The dissipated heat discharge portion 255 may include a discharge grille 256.

An opening is formed in each of the front and rear surfaces of the cabinet 110, and doors 170 and 180 may be coupled to the openings, respectively.

In detail, the doors 170 and 180 include an outdoor-side door 180 opening or closing an opening formed at an outdoor-side end of the cabinet 110 and an indoor-side door 170 opening or closing an opening formed at an indoor-side end of the cabinet 110.

The outdoor-side door 180 is a door that is capable of being opened from the outside in order for the delivery person to store the delivered article. After inputting a password or recognizing an article, the delivery person may open the outdoor-side door 180 to put food into the storage compartment 110a.

The user may open the indoor-side door 170 to take out the food stored in the storage compartment 110a. The structure of the indoor-side door 170 is similar to that of the outdoor-side door 180. The indoor-side door 170 may be provided with a pressing portion 172 this is capable of being manipulated to open the door. The user may open the indoor-side door 170 by pressing the pressing portion 172. However, since the indoor-side door 170 is a door disposed at the indoor-side and may only be accessed by a user, and thus locking may not be required. Accordingly, an action (password input, article recognition, etc.) for unlocking to open the outdoor-side door 180 may not be required.

A cold air supply device 200 is provided at the lower portion of the cabinet 100. The cold air supply device 200 may be installed in a space defined by both lower sides of the cabinet side surface portion 111, the cabinet bottom surface portion 115, the front surface support portion 119, and the cabinet rear surface portion 116.

An external air inflow portion 252 for allowing external air to flow into the cold air supplying device 200 is formed in the cabinet bottom surface portion 115. The air suctioned in through the external air inflow portion 252 is discharged through the dissipated heat discharge portion 255 via a heat dissipation fan 280 and a heat sink 220 of the cold air supply device 200. An inflow grille 253 may be installed in the external air inflow portion 252. It may be understood that the external air inflow portion 252 and the dissipated heat discharge portion 255 are formed in an outer wall of the cabinet 110.

The storage compartment 110a may be defined by an inner wall of the cabinet 110. In detail, the inner wall of the cabinet 110 includes a storage compartment lower wall 121 forming a seating surface on which food is placed, a storage compartment sidewall 123 extending upward from both sides of the storage compartment lower wall 121, a storage compartment upper wall 126 forming a top surface of the storage compartment 110a and connecting an upper portion of the storage compartment sidewall 123, and a storage compartment rear wall 125 connecting a rear portion of the storage compartment sidewall 123.

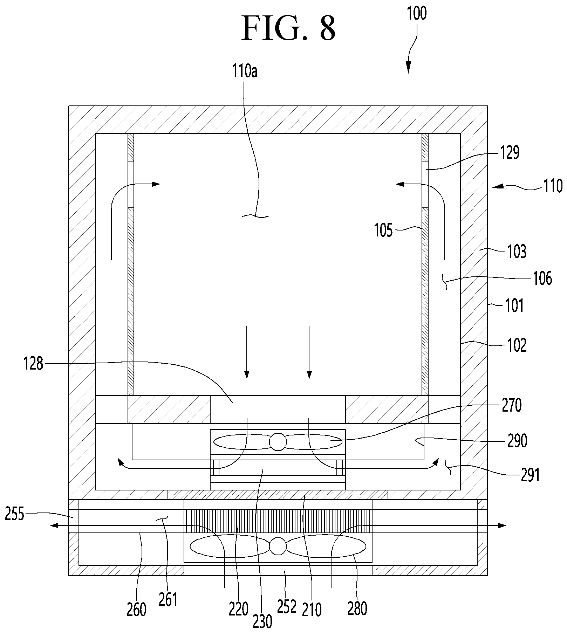

The storage compartment 110a may be configured to form a substantially hexahedral space by the storage compartment lower wall 121, the storage compartment sidewall 123, the storage compartment upper wall 126, and the storage compartment rear wall 125. The storage compartment sidewall 123 forms one surface of a second passage duct 105 (see Fig. 8).

The storage compartment lower wall 121 may be provided with a rib 122 protruding upward, and the rib 122 may extend forward and backward and be provided in plurality, which are arranged in left and right directions. Food is placed at an upper side of the plurality of ribs 122 to prevent the food from being slid.

A cold air inflow hole 128 for allowing the cold air inside the storage compartment 110a to return to the cold air supply device 200 is formed in the storage compartment lower wall 121. For example, the cold air inflow hole 128 may be formed at a rear side of the storage compartment lower wall 121.

A cold air discharge hole 129 for supplying the cold air generated by the cold air supply device 200 to a side of the storage compartment 110a is formed in the storage compartment sidewall 123. The cold air generated in the cold air supply device 200 may be supplied to the side surface portion of the storage compartment 110a by the configurations of the cold air inflow hole 128 and the cold air discharge hole 129, and then be returned to the cold air supply device 200 through a rear lower portion.

A camera 118 capable of photographing food put into the storage compartment 110a may be installed on the upper wall 126 of the storage compartment 110a.

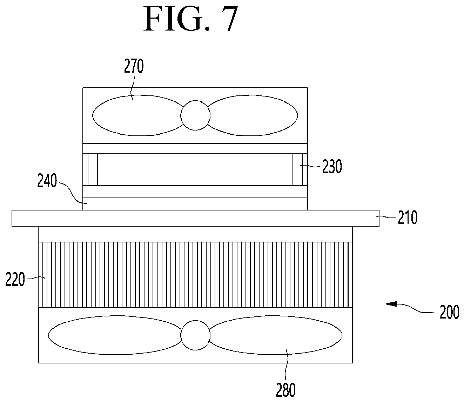

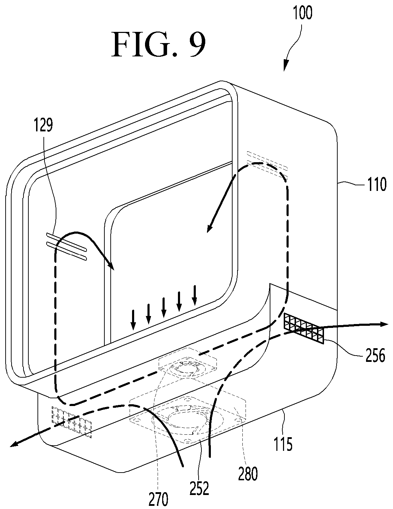

Fig. 7 is a view illustrating a configuration of the cold air supply device according to the present invention, FIG. 8 is a cutaway cross-sectional view taken along line 8-8 of Fig. 4, and Fig. 9 is a view a state in which a state in which cold air supply and heat dissipation are performed in the entrance refrigerator according to an embodiment of the present i nventi on

Referring to Figs. 7 to 9, the cold air supply device 200 is installed at the lower portion of the cabinet 100 and is provided at a lower portion of the storage compartment 110a to form a cold air passage and a heat dissipation passage.

The cold air supply device includes a thermoelectric module for generating cold air. Since the entrance refrigerator 100 is not provided with a component for driving a refrigeration cycle, for example, a high noise generation source such as a compressor, and thus, noise generation during the operation of the refrigerator 100 may be reduced.

And, since the thermoelectric module is configured to be relatively lightweight, it is possible to reduce a weight of the entrance refrigerator 100, which needs to be stably installed on the entrance door D.

The thermoelectric module 200 includes a thermoelectric element, and the thermoelectric element refers to an element that implements cooling and heat generation using a Peltier effect. When a heat absorption-side of the thermoelectric element is disposed to face the storage compartment 110a, and a heat generation-side of the thermoelectric element is disposed to face the lower portion of the refrigerator 100, the storage compartment 110a may be cooled through an operation of the thermoelectric element.

In detail, the thermoelectric module 200 includes a module body 210 to which the thermoelectric element is coupled and which has a rectangular plate shape, a cold sink 230 provided at one side of the module body 210 to be heat-exchanged with the cold air of the storage compartment 110a, and a heat sink 220 provided at the other side of the module body 210 to be heat-exchanged with external air.

The one side of the module body 210 is a direction toward the storage compartment 110, that is, an upper side with respect to the thermoelectric module 200, and the other side is a direction toward the outside of the refrigerator 100, that is, a lower side.

The cold sink 230 is disposed to be in contact with the heat absorption portion of the thermoelectric element, and the heat sink 220 is disposed to be in contact with the heat generation portion of the thermoelectric element. The heat absorption portion and the heat generation portion of the thermoelectric element may have shapes that are in surface contact with each other to form opposite surfaces.

In the thermoelectric module 200, heat has to be rapidly dissipated from the heat generation portion of the thermoelectric element, so that the heat is sufficiently absorbed into the heat absorption portion of the thermoelectric element. Thus, a heat exchange area of the heat sink 220 may be larger than a heat exchange area of the cold sink 230.

Each of the heat sink 220 and the cold sink 230 may include a base that is in contact with the thermoelectric element and a heat exchange fin coupled to the base.

The thermoelectric module 200 may further include a module insulator 240 installed between the cold sink 230 and the heat sink 220. For example, the module insulator 240 may have a quadrangular frame shape and may be disposed to surround an edge of the thermoelectric element

A cold air circulation fan 270 is installed at an upper side of the thermoelectric module 200 to face the storage compartment 110a so as to forcibly circulate the cold air in the storage compartment 110a. The cold air circulation fan 270 is disposed above the cold sink 230. Also, for example, the cold air circulation fan 270 may include a centrifugal fan that suctions cold air in an axial direction and discharges the cold air in a radial direction.

The cabinet 110 includes an outer case 101 that forms an outer appearance of the entrance refrigerator 100, an inner case 101 that is inserted into the outer case 101 to form at least a portion of the inner wall of the storage compartment, and an insulator 103 provided between the outer case 101 and the inner case 101.

A first passage duct 290 extending from the cold sink 230 to guide a flow of the cold air is provided inside the cabinet 110.

The first passage duct 290 may be configured to extend laterally from both sides of the cold sink 230 and then extend upward. A first cold air passage 291 may be formed inside the first passage duct 290. In addition, the first passage duct 290 is connected to a second passage duct 105.

The second passage duct 105 is provided on each of both sides of the inner case 101. The second passage duct 105 forms the storage compartment sidewall 123, and the cold air discharge hole 129 is formed at an upper portion of the second passage duct 105.

A second cold air passage 106 through which the cold air flows is formed between each of both side surfaces of the inner case 101 and the second passage duct 105. The second cold air passage 106 extends upward from the first cold air passage 291.

When the cold air circulation fan 270 is driven, the cold air in the storage compartment 110a flows in the axial direction of the cold air circulation fan 270 through the cold air inflow hole 128, and then is heat-exchanged with the cold sink 230 so as to be cooled. Then, the cooled cold air flows to both sides in the radial direction of the cold air circulation fan 270 and is introduced into the first cold air passage 291.

The cold air flowing along the first cold air passage 291 may flow upward to flow into the second cold air passage 106 and then be discharged to both the sides of the storage compartment 110a through the cold air discharge hole 129.

The thermoelectric module 200 further includes a heat dissipation fan 280 that introduces external air (indoor air) to be heat-exchanged with the heat dissipation portion of the thermoelectric device. The heat dissipation fan 280 is supported on the cabinet bottom surface portion 115 and be disposed above the external air inflow portion 252. For example, the heat dissipation fan 280 may include a centrifugal fan that suctions the cold air in the axial direction and discharges the cold air in the radial direction.

A heat dissipation passage duct 260 extending from the heat sink 220 to guide a flow of external air and forming a heat dissipation passage 261 therein may be provided in the cabinet 110. The heat dissipation passage duct 260 may extend laterally from both sides of the heat sink 220 and be connected to the dissipated heat discharge portion 255.

When the heat dissipation fan 278 is driven, the external air is introduced in the axial direction of the heat dissipation fan 280 through the external air inflow portion 252 and then is heat-exchanged with the heat sink 220 so as to be heated. In addition, the heated cool air may flow in the radial direction of the heat dissipation fan 270 and may be discharged from the dissipated heat discharge portion 255 to the outside of the refrigerator through the heat dissipation passage duct 260.

As power to be supplied to the entrance refrigerator 100, power to be supplied to an intercom or a doorbell installed around the door D, or an indoor-side lighting source may be used.

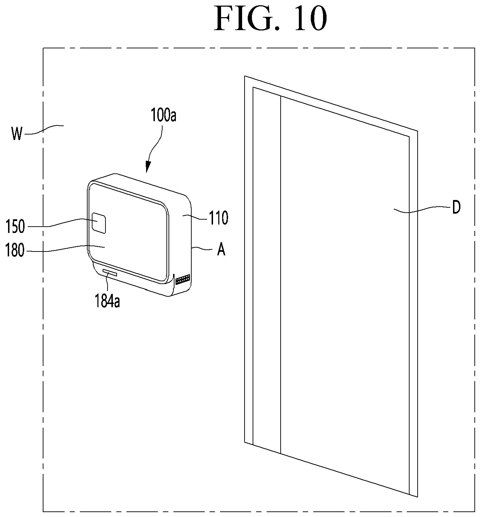

Fig. 10 is a view illustrating a state in which the entrance refrigerator is installed on a wall of an entrance according to an embodiment of the present invention.

Referring to Fig. 10, an entrance refrigerator 100a according to an embodiment of the present invention may be installed on an entrance wall W. For example, the entrance refrigerator 100a may be attached to the wall W. That is, a rear surface of the entrance refrigerator 100a is attached to the wall W, and when compared to the refrigerator to be installed on the door, which is described in Fig. 1, the indoor-side door 170 may not be provided. A rear surface of the entrance refrigerator 100a may form an attachment surface A.

Therefore, both a delivery person and a user may access the storage compartment of the cabinet using the outdoor-side door 180.

Since a configuration of a cabinet provided in the entrance refrigerator 100a is similar to the cabinet 110 of the entrance refrigerator 100 described with reference to Fig. 1, the description will be cited from those of Figs. 1 to 3.

A code reader 184a may be provided at a lower portion of a front surface of the refrigerator 100a. The position of the code reader 184a is different from the installation position of the code reader 184 described in Fig. 1. However, description of a function and operation of the code reader 184a will be cited from the description of the code reader 184 described in Fig. 1.

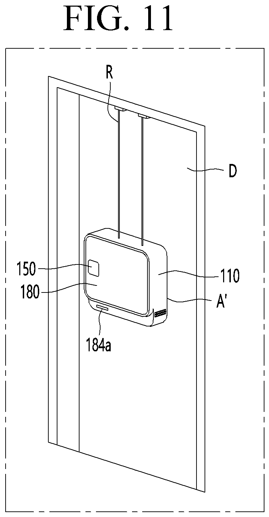

Fig. 11 is a view illustrating a state in which the entrance refrigerator is hung on the entrance door by a wire according to an embodiment of the present invention.

Referring to Fig. 11, an entrance refrigerator 100b according to an embodiment of the present invention is attached to a front surface of the door D and may be supported by a wire R. A rear surface of the refrigerator 100b may form an attachment surface A'.

The wire R may be attached to an upper portion of the door D to extend downward and may be connected to an upper end of the refrigerator 100b. A configuration of the refrigerator 100b itself is the same as that of the refrigerator 100a described with reference to Fig. 10, and thus, the description of Fig. 10 is cited.

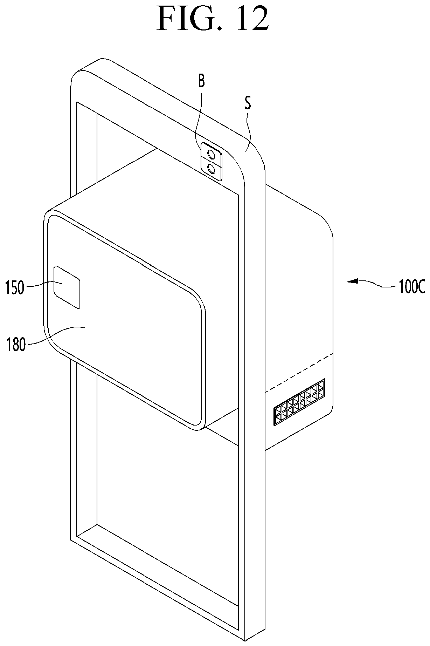

Fig. 12 is a view illustrating a state in which the entrance refrigerator is mounted on a stand according to an embodiment of the present invention.

Referring to Fig. 12, an entrance refrigerator 100c according to an embodiment of the present invention may be configured to be supported by a stand S. The stand S may be configured to have a shape of a substantially rectangular frame and to be erected. As an example, the stand S may be installed around an entrance door D or around an entrance wall W.

In addition, a doorbell B may be installed on the stand S, and a portion of power supplied to the doorbell B may be transferred to the entrance refrigerator 100c and used. The description of a configuration of the entrance refrigerator 100c itself is cited from the description of the refrigerator described in Figs. 10 and 11.

## Claims

1. An entrance refrigerator, comprising:
a cabinet (110) suitable for being installed in a door (D) or a wall (W), the cabinet (110) comprising:
openings at one surface and the other surface thereof, respectively; and
a storage compartment (110a) therein;
an outdoor-side door (180) connected to the cabinet (110) to open or close the opening defined in the one surface of the cabinet (110);
an indoor-side door (170) connected to the cabinet (110) to open or close the opening defined in the other surface of the cabinet (110); and
a cold air supply device (200) provided inside the cabinet (110) to supply cold air to the storage compartment (110a), wherein the cabinet (110) comprises:
a first case configured to define the storage compartment (110a);
a second case disposed at a lower side of the storage compartment (110a) to define a heat dissipation space;
wherein the cold air supply device (200) comprises a thermoelectric element (210) having a heat absorption surface facing the storage compartment (110a) and a heat generation surface facing the heat dissipation space;
a partition wall configured to partition the storage compartment (110a) and the heat dissipation space from each other,
a cold sink (230) attached to the heat absorption surface;
a heat sink (220) attached to the heat generation surface;
a module insulator (240) disposed between the cold sink (230) and the heat sink (220) to surround the thermoelectric element (210), **characterized by**
a cold air circulation fan (270) disposed above the cold sink (230); and
a heat dissipation fan (280) is disposed below the heat sink (220),
an external air inflow portion (252) defined in a bottom surface of the second case,
a pair of dissipated heat discharge portions (255) respectively defined in both side surfaces of the second case to release air, which is introduced through the external air inflow portion (252) and is heat-exchanged with the heat sink (220), to an outside of the second case,
a first passage duct (290) provided in a bottom of the storage compartment (110a); and
a pair of second passage ducts (105) communicating with the first passage duct (290) and forming both sidewalls (123) of the storage compartment (110a) respectively,
a pair of cold air discharge holes (129) to supply cold air flowing through the second passage ducts (105) to the storage compartment (110a) is respectively formed in the pair of second passage ducts (105) and a cold air inflow hole (128) defined in the bottom of the storage compartment (110a),
wherein a cold air passage includes:
a first cold air passage (291) formed inside the first passage duct (290); and
a second cold air passage (106) formed inside each of the pair of second passage ducts (105),
wherein the second cold air passage (106) extends upward from the first cold air passage (291),
wherein the cold air flowing along the cold air passage (106) is supplied to the storage compartment (110a) through the pair of cold air discharge holes (129),
and wherein the cold air of the storage compartment (110a) is guided to the cold sink (230) through the cold air inflow hole (128).

2. The refrigerator according to claim 1, wherein the cold air supply device (230) is installed to pass through the partition wall,
the cold sink (230) and the cold air circulation fan (270) are exposed to the cold air of the storage compartment (110a), and
the heat sink (220) and the heat dissipation fan (280) are exposed to air of the heat dissipation space.

3. The refrigerator according to claim 1, wherein a front surface of the cabinet (110) defining a front surface of the second case is in close contact with the door (D) or the wall (W).

4. The refrigerator according to claim 1, further comprising a camera (108) mounted on a top surface of the storage compartment (110a).

5. The refrigerator according to claim 1, further comprising a code reader (184) provided on the cabinet (110) or the outdoor-side door (180), the code reader (184) being configured to read information about food.

6. The refrigerator according to claim 1, further comprising a display portion (150) disposed on the outdoor-side door (180),
wherein the display portion (150) is provided with an input portion to input a password.

7. The refrigerator according to claim 1, wherein a horizontal distance (W2) from an indoor-side surface of the door (D) to an outer surface of the indoor-side door (170) is greater than a horizontal distance (W1) from an outdoor-side surface of the door (D) to an outer surface of the outdoor-side door (180).

## Patentansprüche

1. Kühlschrank für die Haustür, der Folgendes umfasst:
ein Gehäuse (110), das in einer Tür (D) oder einer Wand (W) installiert werden kann, wobei das Gehäuse (110) Folgendes umfasst:
Öffnungen an jeweils einer Oberfläche und der anderen Oberfläche; und
ein darin ausgebildetes Vorratsfach (110a);
eine außenliegende Tür (180), die mit dem Gehäuse (110) verbunden ist, um die Öffnung, die in der einen Oberfläche des Gehäuses (110) definiert ist, zu öffnen oder zu schließen;
eine innenliegende Tür (170), die mit dem Gehäuse (110) verbunden ist, um die Öffnung, die in der anderen Oberfläche des Gehäuses (110) definiert ist, zu öffnen oder zu schließen; und
eine Kaltluft-Zufuhrvorrichtung (200), die im Gehäuse (110) zum Zuführen von kalter Luft zum Vorratsfach (110a) vorgesehen ist, wobei der Gehäuse (110) Folgendes umfasst:
ein erstes Fach, das konfiguriert ist, das Vorratsfach (110a) zu definieren;
ein zweites Fach, das an einer Unterseite des Vorratsfachs (110a) angeordnet ist, um einen Wärmeverteilungsraum zu definieren;
wobei die Kaltluft-Zufuhrvorrichtung (200) ein thermoelektrisches Element (210) umfasst, das eine Wärmeabsorptionsfläche, die zum Vorratsfach (110a) zeigt, und eine Wärmeerzeugungsfläche, die zum Wärmeverteilungsraum zeigt, aufweist;
eine Trennwand, die konfiguriert ist, das Vorratsfach (110a) und den Wärmeverteilungsraum voneinander zu trennen,
ein Wärmeabsorptionselement (230), das an der Wärmeabsorptionsfläche befestigt ist;
einen Kühlkörper (220), der an der Wärmeerzeugungsfläche befestigt ist;
eine Modulisolierung (240), die zwischen dem Wärmeabsorptionselement (230) und dem Kühlkörper (220) angeordnet ist, die das thermoelektrische Element (210) umgibt, **gekennzeichnet durch**
ein Kaltluft-Umwälzgebläse (270), das über dem Wärmeabsorptionselement (230) angeordnet ist; und
ein Wärmeverteilungsgebläse (280), das unter dem Kühlkörper (220) angeordnet ist,
einen Außenluft-Einströmabschnitt (252), der in einer Bodenfläche des zweiten Fachs definiert ist,
ein Paar Abschnitte (255) zum Abführen der verteilten Wärme, die jeweils in beiden Seitenflächen des zweiten Fachs definiert sind, um Luft, die durch den Außenluft-Einströmabschnitt (252) eingeleitet wird und mit dem Kühlkörper (220) einen Wärmeaustausch ausgeführt hat, zur Außenseite des zweiten Fachs abzugeben,
einen ersten Durchgangsschacht (290), der in einem Boden des Vorratsfachs (110a) vorgesehen ist; und
ein Paar zweiter Durchgangsschächte (105), die mit dem ersten Durchgangsschacht (290) kommunizieren und jeweils beide Seitenwände (123) des Vorratsfachs (110a) bilden,
ein Paar Kaltluft-Austrittslöcher (129), um dem Vorratsfach (110a) kalte Luft, die durch die zweiten Durchgangsschächte (105) strömt, zuzuführen, die jeweils im Paar zweiter Durchgangsschächte (105) ausgebildet sind, und ein Kaltluft-Einströmloch (128), das im Boden des Vorratsfachs (110a) definiert ist,
wobei ein Kaltluftdurchgang Folgendes umfasst:
einen ersten Kaltluftdurchgang (291), der im ersten Durchgangsschacht (290) ausgebildet ist; und
einen zweiten Kaltluftdurchgang (106), der in jedem des Paars zweiter Durchgangsschächte (105) ausgebildet ist,
wobei sich der zweite Kaltluftdurchgang (106) vom ersten Kaltluftdurchgang (291) nach oben erstreckt,
wobei die kalte Luft, die längs des Kaltluftdurchgangs (106) strömt, dem Vorratsfach (110a) durch das Paar Kaltluft-Austrittslöcher (129) zugeführt wird, und
wobei die kalte Luft des Vorratsfachs (110a) durch das Kaltluft-Einströmloch (128) zum Wärmeabsorptionselement (230) geleitet wird.

2. Kühlschrank nach Anspruch 1, wobei die Kaltluft-Zufuhrvorrichtung (230) so installiert ist, dass sie durch die Trennwand verläuft,
das Wärmeabsorptionselement (230) und das Kaltluft-Umwälzgebläse (270) der kalten Luft des Vorratsfachs (110a) ausgesetzt sind, und
der Kühlkörper (220) und das Wärmeverteilungsgebläse (280) der Luft des Wärmeverteilungsraums ausgesetzt sind.

3. Kühlschrank nach Anspruch 1, wobei eine vordere Oberfläche des Gehäuses (110), die eine Vorderseite des zweiten Fachs definiert, mit der Tür (D) oder der Wand (W) in direktem Kontakt ist.

4. Kühlschrank nach Anspruch 1, der ferner eine Kamera (108) umfasst, die an einer oberen Oberfläche des Vorratsfachs (110a) montiert ist.

5. Kühlschrank nach Anspruch 1, der ferner eine Code-Lesevorrichtung (184) umfasst, die am Gehäuse (110) oder der außenliegenden Tür (180) vorgesehen ist, wobei die Code-Lesevorrichtung (184) konfiguriert ist, Informationen bezüglich Lebensmitteln zu lesen.

6. Kühlschrank nach Anspruch 1, der ferner einen Anzeigeabschnitt (150) umfasst, der an der außenliegenden Tür (180) angeordnet ist,
wobei der Anzeigeabschnitt (150) mit einem Eingabeabschnitt versehen ist, um ein Passwort einzugeben.

7. Kühlschrank nach Anspruch 1, wobei ein horizontaler Abstand (W2) von einer innenliegenden Oberfläche der Tür (D) zu einer äußeren Oberfläche der innenliegenden Tür (170) größer als ein horizontaler Abstand (W1) von einer außenliegenden Oberfläche der Tür (D) zu einer äußeren Oberfläche der außenliegenden Tür (180) ist.

## Revendications

1. Réfrigérateur d'entrée, comportant :
une armoire (110) adaptée pour être installée dans une porte (D) ou un mur (W), l'armoire (110) comportant :
des ouvertures sur une première surface et sur la seconde surface de celui-ci, respectivement ; et
un compartiment de stockage (110a) dans celui-ci ;
une porte côté extérieur (180) reliée à l'armoire (110) pour ouvrir ou fermer l'ouverture définie dans la première surface de l'armoire (110) ;
une porte côté intérieur (170) reliée à l'armoire (110) pour ouvrir ou fermer l'ouverture définie dans la seconde surface de l'armoire (110) ; et
un dispositif d'alimentation en air froid (200) agencé à l'intérieur de l'armoire (110) pour fournir de l'air froid au compartiment de stockage (110a), dans lequel l'armoire (110) comporte :
un premier boîtier configuré pour définir le compartiment de stockage (110a) ;
un second boîtier disposé sur un côté inférieur du compartiment de stockage (110a) pour définir un espace de dissipation de chaleur ;
dans lequel le dispositif d'alimentation en air froid (200) comporte un élément thermoélectrique (210) ayant une surface d'absorption de chaleur dirigée vers le compartiment de stockage (110a) et une surface de production de chaleur dirigée vers l'espace de dissipation de chaleur ;
une paroi de séparation configurée pour séparer le compartiment de stockage (110a) et l'espace de dissipation de chaleur l'un de l'autre,
un dissipateur de froid (230) fixé à la surface d'absorption de chaleur ;
un dissipateur de chaleur (220) fixé à la surface de production de chaleur ;
un isolant de module (240) disposé entre le dissipateur de froid (230) et le dissipateur de chaleur (220) pour entourer l'élément thermoélectrique (210), **caractérisé par**
un ventilateur de circulation d'air froid (270) disposé au-dessus du dissipateur de froid (230) ; et
un ventilateur de dissipation de chaleur (280) est disposé sous le dissipateur de chaleur (220),
une partie d'écoulement d'entrée d'air externe (252) définie dans une surface de fond du second boîtier,
une paire de parties d'évacuation de chaleur dissipée (255) respectivement définies dans les deux surfaces latérales du second boîtier pour libérer de l'air, qui est introduit par la partie d'écoulement d'entrée d'air externe (252) et est en échange thermique avec le dissipateur de chaleur (220), vers un extérieur du second boîtier,
un premier conduit de passage (290) agencé dans un fond du compartiment de stockage (110a) ; et
une paire de seconds conduits de passage (105) en communication avec le premier conduit de passage (290) et formant les deux parois latérales (123) du compartiment de stockage (110a) respectivement,
une paire de trous d'évacuation d'air froid (129) pour fournir de l'air froid s'écoulant à travers les seconds conduits de passage (105) au compartiment de stockage (110a) est respectivement formée dans la paire de seconds conduits de passage (105) et un trou d'écoulement d'entrée d'air froid (128) défini dans le fond du compartiment de stockage (110a),
dans lequel un passage d'air froid inclut :
un premier passage d'air froid (291) formé à l'intérieur du premier conduit de passage (290) ; et
un second passage d'air froid (106) formé à l'intérieur de chaque conduit de la paire de seconds conduits de passage (105),
dans lequel le second passage d'air froid (106) s'étend vers le haut à partir du premier passage d'air froid (291),
dans lequel l'air froid s'écoulant le long du passage d'air froid (106) est fourni au compartiment de stockage (110a) par la paire de trous d'évacuation d'air froid (129),
et dans lequel l'air froid du compartiment de stockage (110a) est guidé jusqu'au dissipateur de froid (230) à travers le trou d'écoulement d'entrée d'air froid (128).

2. Réfrigérateur selon la revendication 1, dans lequel le dispositif d'alimentation en air froid (230) est installé de manière à passer à travers la paroi de séparation,
le dissipateur de froid (230) et le ventilateur de circulation d'air froid (270) sont exposés à l'air froid du compartiment de stockage (110a), et
le dissipateur de chaleur (220) et le ventilateur de dissipation de chaleur (280) sont exposés à l'air de l'espace de dissipation de chaleur.

3. Réfrigérateur selon la revendication 1, dans lequel une surface avant de l'armoire (110) définissant une surface avant du second boîtier est en contact direct avec la porte (D) ou le mur (W).

4. Réfrigérateur selon la revendication 1, comportant en outre une caméra (108) montée sur une surface supérieure du compartiment de stockage (110a).

5. Réfrigérateur selon la revendication 1, comportant en outre un lecteur de code (184) agencé sur l'armoire (110) ou la porte côté extérieur (180), le lecteur de code (184) étant configuré pour lire des informations concernant des aliments.

6. Réfrigérateur selon la revendication 1, comportant en outre une partie d'affichage (150) disposée sur la porte côté extérieur (180),
dans lequel la partie d'affichage (150) est pourvue d'une partie d'entrée pour entrer un mot de passe.

7. Réfrigérateur selon la revendication 1, dans lequel une distance horizontale (W2) d'une surface côté intérieur de la porte (D) jusqu'à une surface extérieure de la porte côté intérieur (170) est supérieure à une distance horizontale (W1) d'une surface côté extérieur de la porte (D) jusqu'à une surface extérieure de la porte côté extérieur (180).
